(19) Europäisches Patentamt
European Patent Office
Office européen des brevets

(11) **EP 2 738 362 B1**

(12) **EUROPÄISCHE PATENTSCHRIFT**

(45) Veröffentlichungstag und Bekanntmachung des Hinweises auf die Patenterteilung:
**17.04.2019 Patentblatt 2019/16**

(21) Anmeldenummer: **13186415.9**

(22) Anmeldetag: **27.09.2013**

(51) Int Cl.:
*F01K 3/16* (2006.01)      *F01K 11/02* (2006.01)
*F01K 27/02* (2006.01)      *F01K 13/02* (2006.01)
*F24D 19/10* (2006.01)      *G06Q 50/06* (2012.01)
*H02J 3/00* (2006.01)      *H02J 3/28* (2006.01)
*H02J 3/38* (2006.01)

(54) **Kraftwärmekopplungssystem**

Cogeneration system

Système de couplage chaleur-force

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2012 DE 102012023486**

(43) Veröffentlichungstag der Anmeldung:
**04.06.2014 Patentblatt 2014/23**

(73) Patentinhaber: **easyOptimize GmbH**
**45141 Essen (DE)**

(72) Erfinder:
• **Matics, Dr. Jens**
**42579 Heiligenhaus (DE)**
• **Kritzer, Marcel**
**44139 Dortmund (DE)**
• **Gropengießer, Björn**
**58675 Hemer (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
WO-A2-2010/126741      DE-A1- 19 535 752
DE-B3-102008 063 954      DE-U1- 29 605 939
US-A- 5 873 251      US-A1- 2004 098 169

• WITZANI M ET AL: "MODELLING OF COGENERATION POWER PLANTS ON TIME-DEPENDENT POWER DEMANDS OF THE CONSUMER//MODELLABBILDUNG VON CO-GENERATION-KRAFTWERKEN AUF DER BASIS ZEITABHAENGIGER ENERGIENACHFRAGEN DURCH DEN KONSUMENTEN", VGB POWERTECH, VGB POWERTECH, ESSEN, DE, Bd. 81, Nr. 12, 1. Dezember 2001 (2001-12-01), Seiten 74-79, XP001112388, ISSN: 1435-3199

EP 2 738 362 B1

**EP 2 738 362 B1**

**Beschreibung**

Die Erfindung betrifft ein Mikro Kraftwärmekopplungssystem, für mindestens ein Gebäude, umfassend mindestens eine Kraftwärmekopplungseinrichtung, mindestens eine mit der Kraftwärmekopplungseinrichtung verbundene thermische Speichereinrichtung zum Speichern zumindest der durch die Kraftwärmekopplungseinrichtung erzeugten thermischen Energie, mindestens eine über eine Kommunikationsverbindung mit der Kraftwärmekopplungseinrichtung und der thermischen Speichereinrichtung verbundene Steuereinrichtung zum Steuern des Kraftwärmekopplungssystems, wobei die Steuereinrichtung eingerichtet ist, mindestens einen Leistungssollwert für einen ersten Zeitraum für die Kraftwärmekopplungseinrichtung zu bestimmen. Darüber hinaus betrifft die Erfindung ein Verfahren zum Betreiben eines Kraftwärmekopplungssystem.

In der heutigen Zeit werden zur Erzeugung von thermischer und elektrischer Energie für Gebäude vermehrt Kraftwärmekopplungssysteme mit mindestens einer Kraftwärmekopplungseinrichtung eingesetzt.

Kraftwärmekopplungseinrichtungen zeichnen sich durch einen hohen Wirkungsgrad aus, da sie neben thermischer Leistung gleichzeitig auch elektrische Leistung erzeugen. Eine Kraftwärmekopplungseinrichtung wird mit einem geeigneten Brennstoff, wie Erdgas, Erdöl, Biogas, Klärgas, Deponiegas, Pflanzenöl, Holz, Pellets, etc., betrieben.

Neben großtechnischen Kraftwärmekopplungskraftwerken finden sich vermehrt so genannte Mikro-Kraftwärmekopplungseinrichtungen in Ein-, Zwei-, und Mehrfamilienhäusern sowie Bürogebäuden. Sowohl die in dem Gebäude benötigte Wärme als auch der im Gebäude benötigte Strom können hierdurch im Gebäude selbst erzeugt und verbraucht werden.

Die von der Kraftwärmekopplungseinrichtung erzeugte Wärme kann zunächst in einer Speichereinrichtung zwischengespeichert und beispielsweise über Wärmetauscher für die Wohnwärme und das Warmwasser abgegeben werden. Die bei der Erzeugung der Wärme gleichzeitig erzeugte elektrische Energie kann im Gebäude unmittelbar verbraucht und/oder in das öffentliche elektrische Netz, insbesondere ein Niederspannungsnetz, eingespeist werden.

Aus dem Stand der Technik ist es bekannt, zur Sicherung eines bestimmten Wärmekomforts die Kraftwärmekopplungseinrichtung in einem wärmegeführten Betrieb zu betreiben. Wärmegeführt bedeutet, dass die Kraftwärmekopplungseinrichtung nur dann aktiviert wird, wenn auch thermische Energie im Gebäude benötigt wird. Dies bedeutet aber auch, dass elektrische Energie nur dann erzeugt wird, wenn thermische Energie benötigt wird unabhängig davon, ob im Gebäude zur gleichen Zeit auch Bedarf an elektrischer Energie besteht.

Des weiteren offenbart Dokument WO2010/126741 A2 ein Kraftwärmekopplungssystem, umfassend eine Kraftwärmekopplungseinrichtung eingerichtet zur Versorgung eines Gebäudes mit elektrischer und thermischer Energie wobei eine Steuereinrichtung vorgesehen ist, welche in Abhängigkeit von Tarifdaten sowie der Nachfrage von thermischer als auf elektrischer Energie Leistungswerte bestimmt.

Ferner ist es aus der Broschüre "RWE Homepower Mikro-KWK, Nehmen Sie Ihre Energieversorgung selbst in die Hand" bereits bekannt, eine Kraftwärmekopplungseinrichtung in einem Gebäude stromorientiert zu betreiben. Stromorientiert bedeutet, dass die Kraftwärmekopplungseinrichtung im Wesentlichen abhängig von der im Gebäude benötigten elektrischen Energie betrieben wird. Dies verbessert die Energieeffizienz des Kraftwärmekopplungssystems.

Eine stromorientierte oder wärmegeführte Kraftwärmekopplungseinrichtung kann jedoch zur Folge haben, dass die Kraftwärmekopplungseinrichtung zu Zeiten deaktiviert ist, wenn ein hoher Strombedarf im öffentlichen elektrischen Stromnetz bzw. eine hohe Stromnachfrage im öffentlichen elektrischen Stromnetz vorliegt. Andererseits kann es dazu kommen, dass die Kraftwärmekopplungseinrichtung in einem Zeitraum aktiviert ist und elektrische Energie produziert, wenn nur eine geringe Stromnachfrage im öffentlichen Stromnetz besteht. Wird im letzteren Fall dennoch Strom ins öffentliche Netz eingespeist (z.B. weil nicht sämtliche elektrische Energie im Gebäude verbraucht werden kann), kann es gar zu einer Überlastung des Niederspannungsnetzes und somit zu Beschädigungen kommen. Schließlich kann es vorkommen, dass die Kraftwärmekopplungseinrichtung zu Zeiten aktiviert wird, wenn gerade die Brennstoffnachfrage im Brennstoffnetz, wie einem Erdgasnetz, hoch ist. Weiterhin ist durch die oben beschriebene Betriebsweise und die reine Ausrichtung des Betriebs am Wärme und/ oder Strom-Bedarf kein kostenoptimaler Betrieb des Mikro-Kraftwärmekopplungssystems möglich.

Es ist daher die Aufgabe der vorliegenden Erfindung, ein Kraftwärmekopplungssystem und ein Verfahren zum Betreiben des Kraftwärmekopplungssystems zur Verfügung zu stellen, welches die zuvor beschriebenen Nachteile zumindest reduziert und insbesondere die Belastung der Versorgungsnetze zumindest reduziert und gleichzeitig einen kostenoptimalen Betrieb des Kraftwärmekopplungssystems sicherstellt.

Diese Aufgabe wird gemäß einem ersten Aspekt der Erfindung bei einem Kraftwärmekopplungssystem gemäß dem Patentanspruch 1 gelöst. Das Kraftwärmekopplungssystem, insbesondere ein Mikro-Kraftwärmekopplungssystem, ist geeignet für den Einsatz in mindestens einem Gebäude. Das Kraftwärmekopplungssystem umfasst mindestens eine Kraftwärmekopplungseinrichtung. Das Kraftwärmekopplungssystem umfasst mindestens eine mit der Kraftwärmekopplungseinrichtung verbundene thermische Speichereinrichtung zum Speichern zumindest der durch die Kraftwärmekopplungseinrichtung erzeugten thermischen Energie. Das Kraftwärmekopplungssystem umfasst mindestens eine über eine Kommunikationsverbindung mit der Kraftwärmekopplungseinrichtung und der thermischen Speichereinrichtung verbundene Steuereinrichtung zum Steuern des Kraftwärmekopplungssystems. Die Steuereinrichtung ist eingerichtet, mindestens einen Leistungssollwert für einen ersten Zeitraum für die Kraftwärmekopplungseinrichtung zu bestimmen. Die Steuereinrichtung ist eingerichtet, mindestens eine Lastprognose für den ersten Zeitraum für das Gebäude zu erstellen. Die Steuereinrichtung ist eingerichtet, in Abhängigkeit der mindestens einen Lastprognose und mindestens einer bereitgestellten Tarifprognose für den ersten Zeitraum den Leistungssollwert für den ersten Zeitraum zu bestimmen.

Im Gegensatz zum Stand der Technik wird erfindungsgemäß die Netzbelastung und der kostenoptimale Betrieb des Mikro-Kraftwärmekopplungssystems bei dem Betrieb einer Kraftwärmekopplungseinrichtung mitberücksichtigt, indem eine Tarifprognose für einen ersten Zeitraum erstellt und der mindestens eine Leistungssollwert in Abhängigkeit der Tarifprognose bestimmt wird. Es ist insbesondere erkannt worden, dass ein über einen ersten Zeitraum variabler Tarif für diesen Zeitraum ein unmittelbares Maß für die Belastung bzw. Auslastung des öffentlichen elektrischen Netzes und/oder des Gasnetzes ist.

Die mindestens eine Kraftwärmekopplungseinrichtung weist eine elektrische Leistung von unter 20 kW auf. Eine derartige Kraftwärmekopplungseinrichtung ist besonders für Wohngebäude oder Bürogebäude geeignet.

Die Kraftwärmekopplungseinrichtung kann mindestens einen Motor und mindestens einen Generator aufweisen. Die Kraftwärmekopplungseinrichtung kann mit einem geeigneten Brennstoff, insbesondere Erdgas, betrieben werden. Die beim Verbrennen des Brennstoffs entstehende Energie kann in thermische und elektrische Energie gewandelt werden.

Mit der Kraftwärmekopplungseinrichtung ist eine thermische Speichereinrichtung zum Speichern der erzeugten thermischen Energie verbunden. Von der thermischen Speichereinrichtung kann die thermische Energie beispielsweise über einen Wärmetauscher an die im Gebäude angeordneten Verbraucher abgegeben werden.

Zum (lokalen) Steuern zumindest der Kraftwärmekopplungseinrichtung ist eine Steuereinrichtung vorgesehen. Die Steuereinrichtung kann insbesondere Rechenmittel, Speichermittel, etc. umfassen. Beispielsweise kann ein Mikroprozessor, ein Computer, etc. als Steuereinrichtung eingesetzt werden. Die Steuereinrichtung verfügt insbesondere über eine bidirektionale Kommunikationsverbindung zu der Kraftwärmekopplungseinrichtung und der thermischen Speichereinrichtung.

Die Steuereinrichtung ist insbesondere dazu eingerichtet, eine Lastprognose für das Gebäude für einen ersten Zeitraum zu erstellen. Bei dem ersten Zeitraum kann es sich beispielsweise um die nächste Woche, den nächsten Tag, die nächste Stunde, etc. handeln. Eine Lastprognose gibt insbesondere an, wie viel (elektrische und/oder thermische) Energie voraussichtlich in dem ersten Zeitraum in dem Gebäude verbraucht/benötigt wird. Insbesondere kann es eine über die Zeit variable Funktion sein.

Neben der Lastprognose wird der Steuereinrichtung eine Tarifprognose bereitgestellt. Die Tarifprognose gibt insbesondere die für den ersten Zeitraum gültigen Preise für den Bezug von Energie aus einem Netz und/oder die Abgabe von Energie an ein Netz, wie dem elektrischen öffentlichen Netz und/oder dem Gasnetz, an. Diese Preise sind wiederum eine Anzeige für die zu erwartende Netzbelastung für den ersten Zeitraum. In Abhängigkeit von der Lastprognose und der Tarifprognose bestimmt die Steuereinrichtung mindestens einen Leistungssollwert zum Ansteuern der Kraftwärmekopplungseinrichtung. Insbesondere wird ein optimaler Leistungssollwert bestimmt, der nicht einzig an dem thermischen und elektrischen Verbrauch im Gebäude, sondern auch die Auslastung des elektrischen Netzes und/oder Brennstoffnetzes angelegt ist. Insbesondere kann es sich um einen kostenoptimierten Leistungssollwert handeln.

Der mindestens eine bestimmte Leistungssollwert kann dann an die Kraftwärmekopplungseinrichtung, beispielsweise an ein Steuergerät der Kraftwärmekopplungseinrichtung, übertragen und das Kraftwärmekopplungseinrichtung während des ersten Zeitraums entsprechend dem mindesten einen Leistungssollwert betrieben werden.

Gemäß einer ersten Ausführungsform des erfindungsgemäßen Kraftwärmekopplungssystems kann mindestens eine Erfassungseinrichtung zum Erfassen von thermischen Energieverbrauchsparametern und/oder elektrischen Energieverbrauchsparametern und/oder Brennstoffverbrauchsparametern vorgesehen sein. Beispielhafte Erfassungseinrichtungen sind so genannte Smart Meter, wie Stromzähler, Wärmezähler, Gaszähler und/oder Volumenstromzähler. Verbrauchsparameter sind beispielsweise der im Gebäude verbrauchte Strom, der in das öffentlich elektrische Netz eingespeiste Strom, der aus diesem Netz (zusätzlich) bezogene Strom, die bezogene Brennstoffmenge oder die im Gebäude verbrauchte thermische Energie.

Die Steuereinrichtung kann mindestens eine Speichereinrichtung zum Speichern der erfassten thermischen Energieverbrauchsparametern jeweils zusammen mit einem Zeitstempel und/oder der erfassten elektrischen Energieverbrauchsparametern jeweils zusammen mit einem Zeitstempel und/oder der erfassten Brennstoffverbrauchsparametern jeweils zusammen mit einem Zeitstempel eingerichtet sein. Beispielsweise können in einer Datenbank zumindest die vergangenen Verbräuche, z.B. zumindest der letzten sieben Tage, hinterlegt sein.

Die mindestens eine Lastprognose kann gemäß einer weiteren Ausführungsform eine elektrische Lastprognose für das Gebäude sein. Mit anderen Worten gibt die elektrische Lastprognose den voraussichtlichen Stromverbrauch im Gebäude an. Die Steuereinrichtung kann eingerichtet sein, die elektrische Lastprognose aus einer Mehrzahl der gespeicherten elektrischen Energieverbrauchsparametern zu erstellen. Indem der vergangene elektrische Verbrauch im Gebäude zur Erstellung der elektrischen Lastprognose herangezogen wird, kann eine verbesserte Prognose erstellt werden. Beispielsweise kann der tatsächliche Verbrauch in einem vorherigen Zeitraum, wie dem vorherigen Tag, als Lastprognose für den ersten Zeitraum, wie dem nächsten Tag, dienen. Dies beruht auf der Annahme, dass sich äußere Umgebungsparameter, wie das Wetter, und das Nutzerverhalten, in erster Näherung konstant bleiben bzw. nur langsam vom vorherigen Zeitraum zum nächsten Zeitraum verändern.

Alternativ oder zusätzlich kann die Steuereinrichtung eine thermische Lastprognose für das Gebäude erstellen. Mit anderen Worten gibt die thermische Lastprognose den voraussichtlichen thermischen Energieverbrauch im Gebäude an. Die Steuereinrichtung kann eingerichtet sein, die thermische Lastprognose aus einer Mehrzahl von gespeicherten thermischen Energieverbrauchsparametern zu erstellen. Indem der vergangene thermische Verbrauch im Gebäude zur Erstellung der thermischen Lastprognose herangezogen wird, kann eine verbesserte Prognose erstellt werden. Beispielsweise kann der tatsächliche Verbrauch in einem vorherigen Zeitraum, wie dem vorherigen Tag, als Lastprognose für den ersten Zeitraum, wie dem nächsten Tag, dienen. Dies beruht auf der Annahme, dass sich äußere Umgebungsparameter, wie das Wetter, und das Nutzerverhalten, konstant bleiben bzw. nur langsam vom vorherigen Zeitraum zum nächsten Zeitraum verändern.

Um die Lastprognose weiter zu verbessern, kann gemäß einer weiteren Ausführungsform der Erfindung die Steuereinrichtung eingerichtet sein, die Mehrzahl von gespeicherten thermischen Energieverbrauchsparametern in Abhängigkeit der zugehörigen Zeitstempel unterschiedlich zu gewichten. Insbesondere können die gespeicherten Energieverbrauchsparameter ihrer Chronologie nach gewichtet werden. Beispielsweise können für einen nächsten Zeitraum, der unmittelbar vorherige Zeitraum stärker gewichtet werden, als der Zeitraum davor.

Alternativ oder zusätzlich kann die Steuereinrichtung eingerichtet sein, die Mehrzahl von gespeicherten elektrischen Energieverbrauchsparametern in Abhängigkeit der zugehörigen Zeitstempel unterschiedlich zu gewichten. Insbesondere können die gespeicherten Energieverbrauchsparameter ihrer Chronologie nach gewichtet werden. Beispielsweise können für einen nächsten Zeitraum, der unmittelbar vorherige Zeitraum stärker gewichtet werden, als der Zeitraum davor.

Gemäß einer weiteren Ausführungsform kann die Steuereinrichtung eingerichtet sein, die thermische und/oder elektrische Lastprognose in Abhängigkeit von bereitgestellten Wetterprognosen und/oder Nutzereingaben zu bestimmen. Hierdurch kann die Genauigkeit einer Lastprognose noch weiter verbessert werden.

Darüber hinaus kann gemäß einer bevorzugten Ausführungsform die bereitgestellte Tarifprognose einen Tarif für die bezogene elektrische Energie für den ersten Zeitraum, einen Tarif für die eingespeiste Energie für den ersten Zeitraum und/oder einen Tarif für die bezogene Gasenergie für den ersten Zeitraum umfassen. Die Tarifprognose kann insbesondere zeitvariable Preise für den ersten Zeitraum umfassen. In einfacher Weise können Informationen über die Netzbelastung erhalten und bei der Steuerung des Kraftwärmekopplungssystems, insbesondere der Kraftwärmekopplungseinrichtung, berücksichtigt werden.

Grundsätzlich kann die Steuereinrichtung die Tarifprognose in beliebiger Weise erhalten. Beispielsweise ist vorstellbar, dass die mindestens eine Steuervorrichtung die Tarifprognose von verschiedenen Anbietern erhält. Gemäß einer bevorzugten Ausführungsform ist mindestens eine entfernt angeordnete zentrale Steuervorrichtung vorgesehen. Bei der zentralen Steuervorrichtung kann es sich um eine zentrale Recheneinrichtung, wie eine Servereinrichtung handeln, mit der insbesondere eine Mehrzahl von Steuereinrichtung von einer entsprechenden Anzahl an Kraftwärmekopplungseinrichtungen verbunden sein können. Die zentrale Steuervorrichtung kann dazu eingerichtet sein, zumindest die Tarifprognose zu erstellen. Beispielsweise kann die Steuervorrichtung zum Abfragen der Daten von der Strombörse eingerichtet sein. Die Steuereinrichtung kann mit der zentralen Steuervorrichtung über ein Kommunikationsnetz verbunden sein, derart, dass die Tarifprognose der Steuereinrichtung bereitgestellt wird. Vorzugsweise kann die Tarifprognose der Steuereinrichtung regelmäßig vor jedem ersten Zeitraum, beispielsweise zu einer bestimmten Uhrzeit am Vorabend vor dem nächsten Tag (ersten Zeitraum) bereitgestellt werden. Das Kommunikationsnetz kann insbesondere das Internet sein. Es versteht sich, dass jedoch auch andere Kommunikationsnetze eingesetzt werden können.

Darüber hinaus können die im Gebäude erfassten Verbrauchs- und Erzeugungsparameter von der Steuereinrichtung an die zentrale Steuervorrichtung übertragen werden. Die zentrale Steuervorrichtung kann eingerichtet sein, eine Datenanalyse durchzuführen. Insbesondere können die Daten für eine Optimierung mehrerer Mikro-Kraftwärmekopplungssysteme verwendet werden.

In einer weiteren bevorzugten Ausführungsform kann die Steuereinrichtung eingerichtet sein, den ersten Zeitraum in eine Mehrzahl von Subzeiträumen zu unterteilen. Beispielsweise kann ein erster Zeitraum, wie ein Tag, in 24, 48 oder bevorzugt 96 Subzeiträume unterteilt werden. Die Steuereinrichtung kann eingerichtet sein, einen Leistungssollwert, insbesondere einen kostenoptimierten Leistungssollwert, für jeden Subzeitraum des ersten Zeitraums zu bestimmen. Vorzugsweise kann eine Leistungssollwertmatrix bestimmt werden. Die Leistungssollwertmatrix kann für jeden Subzeitraum mindestens einen entsprechenden Leistungssollwert für die Kraftwärmekopplungseinrichtung aufweisen. Eine genauere Steuerung der Kraftwärmekopplungseinrichtung ist möglich.

Um auf aktuelle Änderungen beim Verbrauch von Energie im Gebäude zeitnah reagieren und ggf. den mindestens einen Leistungssollwert anzupassen, kann vorzugsweise die mindestens eine Erfassungseinrichtung die augenblicklichen Energieverbrauchsparameter erfassen. Die Steuereinrichtung kann eingerichtet sein, die aktuellen Energieverbrauchsparameter auszuwerten, derart, bei Detektion einer Abweichung des augenblicklich erfassten Energieverbrauchsparameters von der Lastprognose zumindest der augenblickliche Leistungssollwert an den augenblicklichen Energieverbrauchsparameter angepasst wird. Insbesondere kann der augenblickliche Leistungssollwert kostenoptimiert an den augenblicklichen Energieverbrauchsparameter angepasst werden. Wird beispielsweise ein erhöhter elektrischer Energieverbrauch im Gebäude detektiert, kann der Leistungssollwert entsprechend erhöht werden.

Alternativ oder zusätzlich kann die zentrale Steuervorrichtung eingerichtet sein, eine augenblickliche Tarifänderung unmittelbar an die Steuereinrichtung zu übertragen. Die Steuereinrichtung kann eingerichtet sein, die augenblickliche Tarifänderung auszuwerten, derart, dass zumindest der augenblickliche Leistungssollwert an die augenblickliche Tarifänderung angepasst wird. Insbesondere kann der augenblickliche Leistungssollwert kostenoptimiert an die augenblickliche Tarifänderung angepasst werden. Beispielsweise können zusätzliche Preissignale von der Steuereinrichtung während des ersten Zeitraums empfangen und insbesondere berücksichtigt werden. Zeitnah kann auf eine Be- bzw. Auslastungsänderung des elektrischen Netzes und/oder des Gasnetzes reagiert werden.

Gemäß einer weiteren Ausführungsform kann eine Zusatzheizeinrichtung vorgesehen sein. Die Zusatzheizeinrichtung kann dazu eingerichtet sein, mittels des gleichen Brennstoffs wie die Kraftwärmekopplungseinrichtung oder mittels eines anderen Brennstoffs thermische Energie zu erzeugen. Die Zusatzheizeinrichtung kann insbesondere stufenlos regelbar sein. Die Zusatzeinrichtung kann mit der thermischen Speichereinrichtung gekoppelt sein. Darüber hinaus kann eine insbesondere bidirektionale Datenverbindung zwischen der Zusatzheizeinrichtung und der Steuereinrichtung vorgesehen sein. Beispielsweise kann die Steuereinrichtung mindestens einen Leistungssollwert für die Zusatzheizeinrichtung entsprechend den vorherigen Ausführungen bestimmen. Beispielsweise kann eine Leistungssollwertmatrix um eine entsprechende Spalte ergänzt werden. Die Zusatzheizeinrichtung kann Zustandsparameter, wie eine Ist-Leistung, der Steuereinrichtung bereitstellen. Bei einem (kurzzeitig) erhöhten Wärmebedarf kann in einfacher Weise zusätzliche thermische Energie bereitgestellt werden.

Die Aufgabe wird gemäß einen weiteren Aspekt der Erfindung durch ein Verfahren gemäß dem vorliegenden Patentanspruch 10 zum Betreiben eines Kraftwärmekopplungssystems gelöst. Das zu betreibende Kraftwärmekopplungssystems ist ein Mikro-Kraftwärmekopplungssystem von mindestens einem Gebäude, wobei das Kraftwärmekopplungssystem mindestens eine Kraftwärmekopplungseinrichtung, mindestens eine mit der Kraftwärmekopplungseinrichtung verbundene thermische Speichereinrichtung zum Speichern zumindest der durch die Kraftwärmekopplungseinrichtung erzeugten thermischen Energie, und mindestens eine über eine Kommunikationsverbindung mit der Kraftwärmekopplungseinrichtung und der thermischen Speichereinrichtung verbundene Steuereinrichtung zum Steuern des Kraftwärmekopplungssystems umfasst. Das Verfahren umfasst die Schritte:

- Erstellen von mindestens einer Lastprognose für den ersten Zeitraum für das Gebäude durch die Steuereinrichtung,
- Bereitstellen einer Tarifprognose für den ersten Zeitraum, und
- Bestimmen von mindestens einem Leistungssollwert für die Kraftwärmekopplungseinrichtung für den ersten Zeitraum in Abhängigkeit der Lastprognose und der Tarifprognose für den ersten Zeitraum.

Insbesondere kann das Verfahren zum Betreiben eines zuvor beschriebenen Kraftwärmekopplungssystems eingesetzt werden.

Ein noch weiterer Aspekt der Erfindung ist ein Computerprogramm mit Instruktionen ausführbar auf einem Prozessor derart, dass ein Kraftwärmekopplungssystem gemäß dem zuvor beschriebenen Verfahren gesteuert wird.

In der Zeichnung zeigt:

Fig. 1 eine schematische Ansicht eines Ausführungsbeispiels eines Kraftwärmekopplungssystems gemäß der Erfindung;

Fig. 2 eine schematische Ansicht eines weiteren Ausführungsbeispiels eines Kraftwärmekopplungssystems gemäß der Erfindung;

Fig. 3 ein beispielhaftes Diagramm mit einer elektrischen Lastprognose eines Tages, eine Bilanzkurve für Nennleistung und eine Bilanzkurve für die untere Leistungsstufe der Kraftwärmekopplungseinrichtung; und

Fig. 4 ein beispielhaftes Diagramm einer Tagesdauerlinie der Betriebsergebnisse.

In den Figuren werden für gleiche Elemente gleiche Bezugszeichen verwendet.

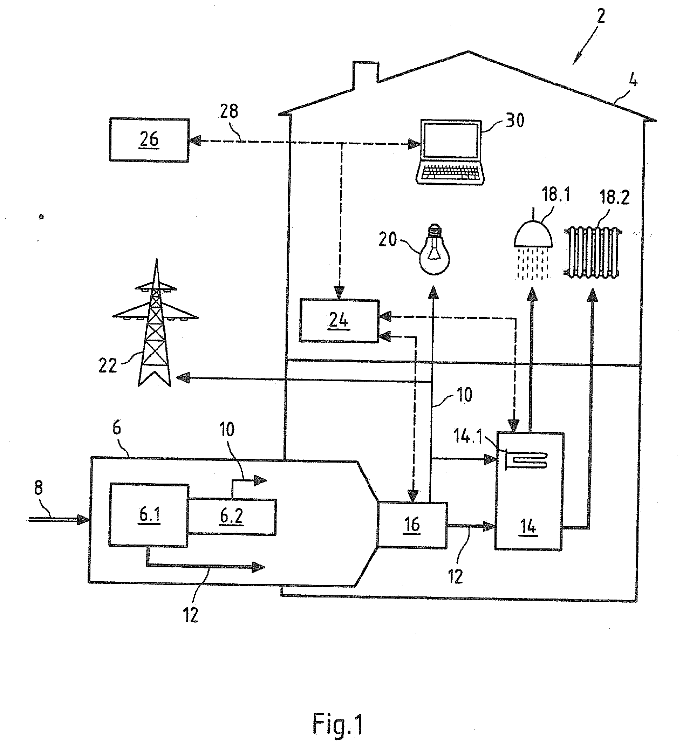

Figur 1 zeigt eine schematische Ansicht eines Ausführungsbeispiels eines Kraftwärmekopplungssystems 2 gemäß der Erfindung. Das dargestellte Kraftwärmekopplungssystem 2 ist insbesondere ein Mikro-Kraftwärmekopplungssystem 2 mit einer elektrischen Leistung zwischen 1 bis 20 kW. Das Kraftwärmekopplungssystem 2 ist in einem Gebäude 4 installiert. Bei dem Gebäude 4 kann es sich beispielsweise um ein Ein-, Zwei-, oder Mehrfamilienhaus, ein Bürogebäude oder dergleichen handeln.

Das vorliegende Mikro-Kraftwärmekopplungssystem 2 umfasst eine Kraftwärmekopplungseinrichtung 6 mit einem Motor 6.1 und einem Generator 6.2. Betrieben wird die vorliegende Kraftwärmekopplungseinrichtung 6 mit Erdgas.

Hierzu ist ein Erdgasanschluss 8 vorgesehen. Es versteht sich, dass gemäß anderen Varianten der Erfindung auch ein anderer Brennstoff verwendet werden kann.

Während der Motor 6.1 thermische Energie erzeugt und über eine Leitung 12 an eine thermische Speichereinrichtung 14 liefert, wird durch den Generator 6.2 elektrische Energie erzeugt und über eine elektrische Leitung 10 beispielsweise an elektrische Verbraucher 20 des Gebäudes 4 abgegeben.

Vorzugsweise ist die Kraftwärmekopplungseinrichtung 6 eine stufenlos einstellbare Kraftwärmekopplungseinrichtung 6. Die Kraftwärmekopplungseinrichtung 6 weist ferner ein Steuergerät 16 auf. Das Steuergerät 16 ist insbesondere zum Steuern des Motors 6.1 und/oder des Generators 6.2 in Abhängigkeit von empfangenen Leistungssollwerten eingerichtet. Insbesondere ist das Steuergerät 16 eingerichtet, empfangene Leistungssollwerte in geeignete Steuersignale zu transformieren und aktuelle Zustandsdaten der Kraftwärmekopplungseinrichtung 6, wie die elektrische Ist-Leistung und/oder die thermische Ist-Leistung, zur Verfügung zu stellen.

Die thermische Speichereinrichtung 14 kann einen (nicht gezeigten) Wärmeaustauscher umfassen. Über weitere Leitungen können thermische Verbraucher 18.1, 18.2 im Gebäude 4 versorgt werden. Ferner kann die thermische Speichereinrichtung 14 über mindestens einen (nicht gezeigten) Temperatursensor zum Messen der Speichertemperatur verfügen. Darüber hinaus kann die thermische Speichereinrichtung 14 einen elektrisch betreibbaren Heizstab 14.1 aufweisen. Der Heizstab 14.1 kann insbesondere dazu eingerichtet sein, das Speicherfluid, insbesondere Wasser, zu erwärmen. Beispielsweise kann ein dreistufig regelbarer Heizstab 14.1 vorgesehen sein.

Über elektrische Leitungen 10 können in dem Gebäude 4 angeordnete elektrische Verbraucher 20 mit Strom versorgt werden. Darüber hinaus weist das Mikro-Kraftwärmekopplungssystem 2 einen elektrischen Anschluss zum öffentlichen elektrischen Netz 22 auf. Dies ermöglicht im Bedarfsfall einerseits den Bezug von elektrischer Energie aus dem öffentlichen elektrischen Netz 22 und ermöglicht andererseits von der Kraftwärmekopplungseinrichtung 6 erzeugte elektrische Energie ins öffentliche elektrische Netz 22 zu speisen.

Darüber hinaus umfasst das abgebildete Mikro-Kraftwärmekopplungssystem 2 eine Steuereinrichtung 24. Die Steuereinrichtung 24 kann insbesondere eine Recheneinrichtung 14 sein und Speichermittel umfassen. Die Steuereinrichtung 24 ist dazu eingerichtet, das Mikro-Kraftwärmekopplungssystem 2 zu steuern. Insbesondere bestimmt die Steuereinrichtung 24 Leistungssollwerte für die Kraftwärmekopplungseinrichtung 6. In Abhängigkeit dieser Leistungssollwerte kann dann die Kraftwärmekopplungseinrichtung 6 von dem Steuergerät 16 betrieben werden.

Die Steuereinrichtung 24 ist insbesondere dazu eingerichtet, mindestens einen Leistungssollwert für die Kraftwärmekopplungseinrichtung 6 für einen zukünftigen Zeitraum zu bestimmen. So kann aus einer Lastprognose für einen ersten Zeitraum, wie dem (folgenden) Tag, und einer bereitgestellten Tarifprognose für den ersten Zeitraum, mindestens ein Leistungssollwert für den ersten Zeitraum bestimmt werden. Dies wird im Folgenden noch näher erläutert.

Die Tarifprognose für den ersten Zeitraum wird insbesondere von einer entfernt angeordneten (zentralen) Steuervorrichtung 26 erstellt. Die entfernt angeordnete Steuervorrichtung 26 kann beispielsweise als eine Servereinrichtung 26 gebildet sein. Mit der entfernt angeordneten Steuervorrichtung kann eine Mehrzahl von weiteren nicht dargestellten Steuereinrichtungen für weitere Kraftwärmekopplungseinrichtungen verbunden sein.

Die Steuereinrichtung 24 kann über ein Kommunikationsnetz 28, wie dem Internet 28, mit der Steuervorrichtung 26 verbunden sein.

Das Mikro-Kraftwärmekopplungssystem 2 kann ferner mindestens eine Recheneinrichtung 30, wie einen PC, einen Tablet-PC, einen Laptop, ein Smartphone, etc., mit einem Display umfassen. Die Recheneinrichtung 30 kann insbesondere dazu eingerichtet sein, bestimmte Daten des Mikro-Kraftwärmekopplungssystems 2, wie Verbrauchsdaten, Leistungssollwerte, Tarifdaten, einem Benutzer zu visualisieren. Diese Daten werden (ausschließlich) über die entfernt angeordnete Steuervorrichtung 26 bereitgestellt. Über die Recheneinrichtung 30 kann der Benutzer zudem bestimmte Vorgaben machen, wie eine gewünschte Solltemperatur für das Gebäude 4, Abwesenheitsangaben oder dergleichen. Diese Kundenvorgaben können dann von der Steuereinrichtung 24 bei der Bestimmung der Leistungssollwerte Berücksichtigung finden.

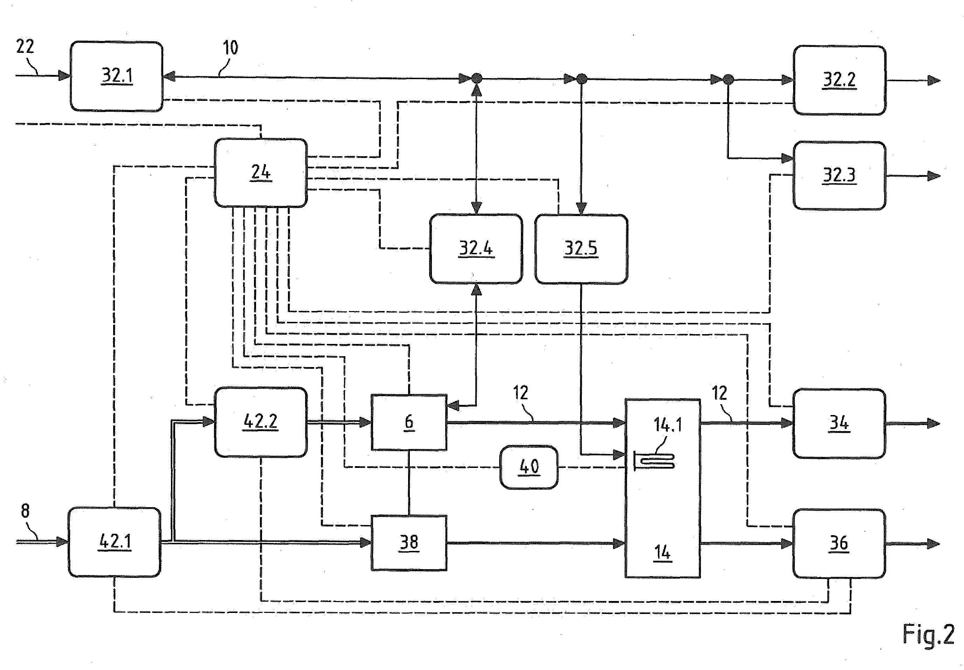

Figur 2 zeigt eine schematische Ansicht eines weiteren Ausführungsbeispiels eines Kraftwärmekopplungssystems 2.1 gemäß der Erfindung. Insbesondere handelt es sich bei dem in Figur 2 dargestellten Kraftwärmekopplungssystem 2.1 um eine beispielhafte detailliertere Ausgestaltung des Kraftwärmekopplungssystems 2 gemäß Figur 1.

Neben den bereits aus Figur 1 bekannten Komponenten Steuereinrichtung 24, Kraftwärmekopplungseinrichtung 6, thermische Speichereinrichtung 14 sowie elektrische Leitungen 10, Erdgasanschluss 8 und Leitungen 12 zur Übertragung der thermischen Energie umfasst das dargestellte Ausführungsbeispiel eine Zusatzheizeinrichtung 38, eine Schnittstelleneinrichtung 40 und eine Mehrzahl an Erfassungseinrichtungen 32, 34, 36, 42 zum Erfassen/Messen von thermischen Energieverbrauchsparametern und/oder elektrischen Energieverbrauchsparametern und/oder Brennstoffverbrauchsparametern.

Die Zusatzheizeinrichtung 38 kann ein Brennwertkessel sein und insbesondere zur zusätzlichen Gewinnung von thermischer Energie eingesetzt werden. Hierzu ist das Zusatzheizeinrichtung 38 mit dem Erdgasanschluss verbunden. Insbesondere kann die Zusatzheizeinrichtung 38 durch die Steuereinrichtung 24 gesteuert werden.

Es versteht sich, dass auch andere Arten von Zusatzheizeinrichtungen vorgesehen sein können. Durch die Zusatzheizeinrichtung 38 wird vorliegend keine zusätzliche elektrische Energie erzeugt.

Die Schnittstelleneinrichtung 40 ist dazu eingerichtet, die Steuereinrichtung 24 mit der Speichereinrichtung 14 zu koppeln, um bidirektional Daten austauschen zu können. Insbesondere können bevorzugt durch eine Mehrzahl von Temperatursensoren die Speichertemperaturen an unterschiedlichen Positionen in der Speichereinrichtung 14 erfasst und mittels einer Kommunikationsverbindung und der Schnittstelleneinrichtung 40 der Steuereinrichtung 24 zur Verfügung gestellt werden.

Ferner sind als Erfassungseinrichtungen eine Mehrzahl von Stromzählern 32.1, 32.2, 32.3, 32.4 und 32.5 vorgesehen. Insbesondere sind als Stromzähler 32.1, 32.2, 32.3, 32.4 und 32.5 so genannte Smart Meter vorgesehen. Der erste Stromzähler 32.1 ist als bidirektionaler Stromzähler 32.1 ausgebildet und insbesondere dazu einrichtet, sowohl den bezogenen Strom aus dem öffentlichen elektrischen Netz 22 als auch den ins öffentliche elektrische Netz 22 eingespeisten Strom zu messen.

Der zweite und dritte Stromzähler 32.2, 32.3 können als Einrichtungszähler 32.2, 32.3 für bestimmte Verbraucher/gruppen ausgebildet sein und die an diese Verbraucher gelieferte Strommenge messen.

Der vierte Stromzähler 32.4 ist vorliegend als bidirektionaler Stromzähler 32.4 ausgebildet und insbesondere dazu einrichtet, sowohl den von der Kraftwärmekopplungseinrichtung 6 bezogenen Strom zu messen als auch den für den Betrieb der Kraftwärmekopplungseinrichtung 6 (ggf.) zur Verfügung gestellten Strom zu messen.

Der fünfte Stromzähler 32.5 ist vorliegend dazu eingerichtet, den von dem zusätzlichen Elektroheizstab 14.1 der thermischen Speichereinrichtung 14 verbrauchten Strom zu messen.

Sämtliche Stromzähler 32 weisen eine Kommunikationsverbindung mit der Steuereinrichtung 24 auf. Vorzugsweise kann eine drahtlose Kommunikationsverbindung vorgesehen sein. Es versteht sich, dass alternativ zumindest einige Kommunikationsverbindungen auch drahtgebunden ausgestaltet sein können.

Die von den einzelnen Stromzählern 32 erfassten Stromparameter können über die Kommunikationsverbindungen an die Steuereinrichtung 24 übertragen werden. Die Steuereinrichtung 24 ist dazu eingerichtet, die empfangenen Stromparameter in einer Speichereinrichtung der Steuereinrichtung 24 zu speichern. Die übertragenen Parameter können insbesondere mit einem Zeitstempel versehen werden. Beispielsweise können die erfassten Verbrauchsparameter mit einem Datum und/oder Uhrzeit versehen werden. Hierdurch kann für vorherige Zeiträume der Verlauf des Energieverbrauchs/- erzeugung abgebildet werden. Dieser Verlauf kann dann zur Erstellung einer elektrischen Lastprognose von der Steuereinrichtung 24 verwendet werden.

Darüber hinaus ist im vorliegenden Ausführungsbeispiel ein Volumenstromzähler 34 vorgesehen. Der dargestellte Volumenstromzähler 34 ist dazu eingerichtet, die von der thermischen Speichereinrichtung 14 gelieferte und im Gebäude 4 verbrauchte Trinkwarmwassermenge zu messen. Der Volumenstromzähler 34 ist ähnlich wie die Stromzähler 32 mit der Steuereinrichtung 24 gekoppelt. Die erfassten Daten können von dem Volumenstromzähler 34 entsprechend den Stromzählerdaten übertragen, mit Zeitstempeln versehen und abgespeichert werden. Die gespeicherten Daten können zur Erstellung einer thermischen Lastprognose von der Steuereinrichtung 24 berücksichtigt werden.

Ähnliches gilt für den abgebildeten Wärmezähler 36. Der dargestellte Wärmezähler 36 ist dazu eingerichtet, die von der thermischen Speichereinrichtung 14 gelieferte und im Gebäude 4 verbrauchte thermische Energie zu messen. Der Wärmezähler 36 ist ähnlich wie die Stromzähler 32 und der Volumenstromzähler 34 mit der Steuereinrichtung 24 für eine Kommunikation gekoppelt. Die erfassten Daten können von dem Wärmezähler 36 entsprechend übertragen, mit Zeitstempeln versehen und abgespeichert werden. Diese Daten können bevorzugt zusätzlich zu der erfassten Trinkwarmwassermenge zur Erstellung einer thermischen Lastprognose von der Steuereinrichtung 24 berücksichtigt werden.

Das Kraftwärmekopplungssystem 2.1 umfasst darüber hinaus zwei mit der Steuereinrichtung 24 verbundene Gaszähler 42.1 und 42.2. Der erste Gaszähler 42.1 kann an dem Gasanschluss 8 des Gebäudes 4 angeordnet sein und die bezogene Gasmenge messen. Der weitere Gaszähler 42.2 kann dazu eingerichtet sein, die von der Kraftwärmekopplungseinrichtung 6 verbrauchte Gasmenge zu messen. Aus diesen Parametern kann - falls erforderlich - die von der Zusatzheizeinrichtung 38 verbrauchte Gasmenge abgeleitet werden.

Auch die von den Gaszählern 42.1, 42.2 erfassten Parameter können entsprechend übertragen, mit Zeitstempeln versehen und abgespeichert werden.

Nachfolgend wird die Funktionsweise des Kraftwärmekopplungssystems 2, 2.1 bzw. das Verfahren zum Betreiben des Kraftwärmekopplungssystems 2, 2.1 beispielhaft näher erläutert.

Wie bereits beschrieben wurde, erfassen eine Mehrzahl von Erfassungseinrichtungen 32, 34, 36, 42 kontinuierlich Verbrauchsdaten von dem Gebäude 4. Diese werden von der Steuereinrichtung 24 in einer Speichereinrichtung zusammen mit einem Zeitstempel abgespeichert.

Die Steuereinrichtung 24 kann dazu eingerichtet sein, regelmäßig, beispielsweise stets am Vorabend des nächsten Tags, für einen ersten zukünftigen Zeitraum, wie dem nächsten Tag, mindestens einen Leistungssollwert für die Kraftwärmekopplungseinrichtung 6 zu bestimmen. Beispielsweise kann die Steuereinrichtung 24 eingerichtet sein, regelmäßig, beispielsweise zu einem festen Zeitpunkt vor Mitternacht für den nächsten Tag (erster Zeitraum) eine Lastprognose zu erstellen. Hierbei kann der nächste Tag vorzugweise in Subzeiträume unterteilt werden.

Es wird eine elektrische Lastprognose als gewichtete Linearkombination der in den letzten Tagen gemessenen elektrischen Werte realisiert.

$$P_{el,Prog}(t) = \alpha_1 \cdot P_{el,Tag-1}(t) + \alpha_2 \cdot P_{el,Tag-2}(t) + \alpha_3 \cdot P_{el,Tag-3}(t), \tag{a}$$

mit

$$\sum_{i=1}^{3} \alpha_i = 1 . \tag{b}$$

Es hat sich gezeigt, dass $\alpha_1$=0.6, $\alpha_2$=0.3, $\alpha_3$=0.1 besonders zielführende Werte sind. Die unmittelbare Vergangenheit wird vorliegend stärker gewichtet, als die weiter zurückliegenden Messwerte. Es versteht sich, dass für die ersten Tage, in denen noch keine Messwerte für die oben beschriebene Berechnung vorliegen, entsprechende Werte vorgeben werden können. Als Ergebnis der Lastprognose $P_{el, Prog}$ stehen 96 Leistungs-Werte in Schrittweiten von 15 Minuten für den Folgetag zur Verfügung.

Neben einer elektrischen Lastprognose $P_{el, Prog}$ kann vorzugsweise eine thermische Lastprognose $P_{th, Prog}$ von der Steuereinrichtung 24 erstellt werden. Die thermische Lastprognose für Trinkwarmwasser und Heizwärme kann insbesondere analog zur elektrischen Lastprognose $P_{el, Prog}$ als gewichtete Linearkombination der in den letzten Tagen gemessenen Werte realisiert werden. Für die thermische Leistung (als Summe aus Heizbedarf und Trinkwarmwasserbedarf) gilt:

$$P_{th,Prog}(t) = \alpha_1 \cdot P_{th,Tag-1}(t) + \alpha_2 \cdot P_{th,Tag-2}(t) + \alpha_3 \cdot P_{th,Tag-3}(t), \tag{c}$$

mit

$$\sum_{i=1}^{3} \alpha_i = 1 . \tag{d}$$

Es hat sich gezeigt, dass $\alpha_1$=0.6, $\alpha_2$=0.3, $\alpha_3$=0.1 besonders zielführende Werte sind. Die unmittelbare Vergangenheit wird vorliegend stärker gewichtet, als die weiter zurückliegenden Messwerte. Es versteht sich, dass für die ersten Tage, in denen noch keine Messwerte für die oben beschriebene Berechnung vorliegen, entsprechende Werte vorgeben werden können. Als Ergebnis der Lastprognose $P_{th, Prog}$ stehen 96 Leistungs-Werte in Schrittweiten von 15 Minuten für den Folgetag zur Verfügung.

Es versteht sich, dass bei der Erstellung der Lastprognosen $P_{th, Progr}$ $P_{th, Prog}$ auch Nutzervorgaben, wie Abwesenheitsangaben, berücksichtigt werden können. Ferner können Wetterprognosen der Steuereinrichtung 24 zur Verfügung gestellt werden. Beispielsweise können Temperaturen und Einstrahlungsdaten postleitzahl-spezifisch für aktuelle und Prognose-Werte des nächsten Tags und/oder der nächsten drei Tage vorzugsweise von der zentralen Steuervorrichtung 26 bereitgestellt. So können auch Wetterschwankungen, wie Temperaturschwankungen, bei der Erstellung der Lastprognose/n von der Steuereinrichtung 24 berücksichtigt werden.

Darüber hinaus wird für den folgenden Tag eine Tarifprognose insbesondere von der zentralen Steuervorrichtung 26 erstellt und der Steuereinrichtung 24 zur Verfügung gestellt. Tageszeitlich variable Tarife können für bezogene elektrische Energie, für eingespeiste elektrische Energie und/oder für die bezogene Erdgasenergie vorzugsweise in 96 Subzeiträumen/Tarifstufen für den nächsten Tag vorgegeben werden können.

Es ist erkannt worden, dass die variablen Tarife ein Indiz für die aktuelle Belastung bzw. Auslastung des Ergasnetzes und des öffentlichen elektrischen Netzes sind. Indem diese Werte bei der Bestimmung insbesondere einer Leistungssollwertematrix mit 96 Zeilen für den nächsten Zeitraum, vorliegend der nächste Tag, berücksichtigt wird, kann neben finanziellen Vorteilen eine gleichmäßigere Belastung der Netze erzielt und insbesondere hohe Belastungsspitzen in den Netzen reduziert werden.

So kann die Kraftwärmekopplungseinrichtung 6 zu Zeiten aktiviert werden, wenn ein hoher Strombedarf im öffentlichen elektrischen Stromnetz bzw. eine Stromnachfrage im öffentlichen elektrischen Stromnetz ist (hoher Strompreis) und Strom ins Netz einspeisen. Darüber hinaus kann die Kraftwärmekopplungseinrichtung 6 in einem Subzeitraum deaktiviert und elektrische Energie nicht produziert werden, wenn nur eine geringe Stromnachfrage im öffentlichen Stromnetz besteht (niedriger Strompreis). Auch kann die Kraftwärmekopplungseinrichtung 6 zu Zeiten aktiviert werden, wenn gerade die Brennstoffnachfrage im Brennstoffnetz, wie einem Erdgasnetz, niedrig ist (niedriger Gaspreis).Es versteht sich, dass dies in Abhängigkeit der Lastprognosen erfolgen kann.

Während des Betriebs des Kraftwärmekopplungssystems 2, 2.1 können die Erfassungseinrichtungen 32, 34, 36, 42 kontinuierlich augenblicklichen Verbrauchsdaten von dem Gebäude 4 erfassen und der Steuereinrichtung 24 zur Verfügung stellen. Die Steuereinrichtung 24 kann dazu eingerichtet sein, die empfangenen augenblicklichen Verbrauchsdaten (unmittelbar) auszuwerten. Beispielsweise kann die Steuereinrichtung 24 die augenblicklichen Verbrauchsdaten mit den entsprechenden prognostizierten Werten aus den entsprechenden Lastprognosen vergleichen. Werden Abweichungen festgestellt, so kann die Steuereinrichtung 24 zumindest den augenblicklichen Leistungssollwert für die Kraftwärmekopplungseinrichtung 6 anpassen.

Auch können der Steuereinrichtungen 24 augenblicklich Änderungen der Tarifdaten bereitgestellt werden. Beispielsweise kann die zentrale Steuervorrichtung 26 zumindest im Fall einer Änderung eines augenblicklichen Tarifs gegenüber der Tarifprognose die Steuereinrichtung 24 benachrichtigen. Dies kann von der Steuereinrichtung 24 ausgewertet werden und in Abhängigkeit der Auswertung ggf. zumindest der augenblickliche Leistungssollwert für die Kraftwärmekopplungseinrichtung 6 angepasst werden.

Darüber hinaus können augenblickliche Zustandsdaten bevorzugt von einer Mehrzahl von Einrichtungen des Kraftwärmekopplungssystems 2, 2.1, wie beispielsweise augenblickliche Speichertemperaturen, Ist-Leistung des Motors 6.1 und/oder Generators 6.2, erfasst und der Steuereinrichtung 24 bereitgestellt werden. Für die einzelnen Zustandsdaten können in der Steuereinrichtung 24 Mindestsollwerte, beispielsweise Nutzervorgaben, hinterlegt sein. Stellt die Steuereinrichtung 24 bei einem Vergleich ein Unterschreiten eines Mindestsollwerts fest, kann beispielsweise ein augenblicklicher Leistungssollwert angepasst werden. Hierdurch kann beispielsweise stets ein Mindestwärmekomfort sichergestellt werden.

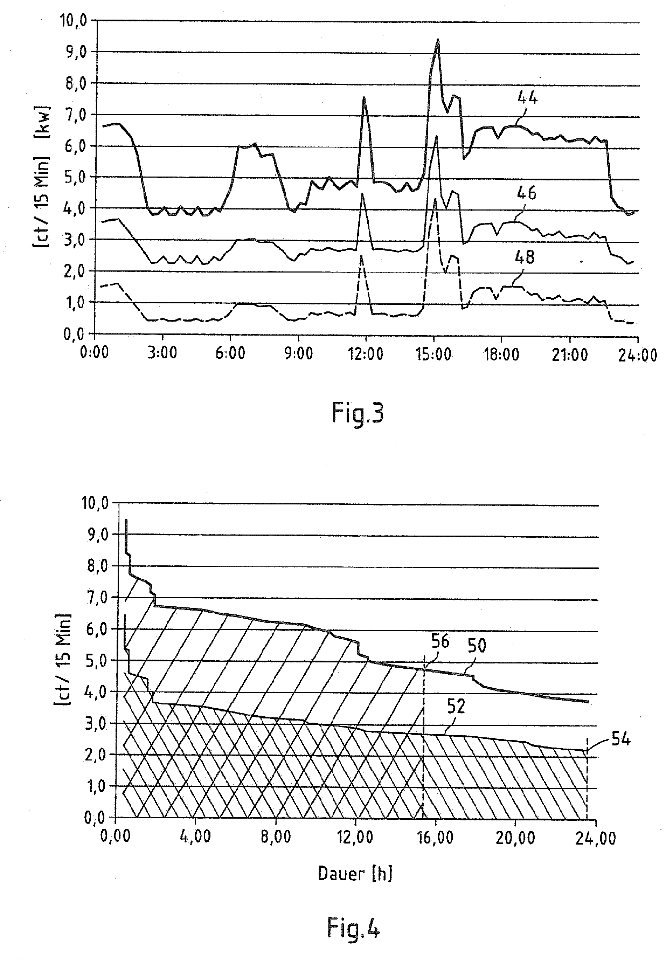

Nachfolgend wird mittels der Figuren 3 und 4 ein Ausführungsbeispiel näher erläutert.

Ziel ist es insbesondere, eine ausgeglichenere Belastung der jeweiligen Netze und einen kostenoptimierten Betrieb des Kraftwärmekopplungssystems zur Wärme- und Stromversorgung des Gebäudes/Endkunden bereitzustellen.

Die von der Zeit (t) abhängigen Betriebskosten $\text{Bilanz}_{KWK}(t)$ können gemäß

$$\text{Bilanz}_{KWK}(t) = \text{Einspeisevergütung}(t) - \text{Stromkosten}(t) -$$
$$\text{Erdgaskosten}(t) + \text{KWK-Bonus}(t) + \text{Stromvergütung}(t) +$$
$$\text{Wärmegutschrift}(t) \qquad\qquad\qquad\qquad\qquad (e)$$

gebildet werden, wobei beispielhaft folgende Tarife Verwendung finden:

In einer Parameterdatei können 4 Spalten vorgesehen sein: Zeit, $\text{Tarif}_{Bezug\_el}$ (18 ct/ kWh), $\text{Tarif}_{Einspeisung\_el}$ (6 ct/kWh), $\text{Tarif}_{Bezug\_Erdgas}$ (5,8 ct/ kWh). Die Werte in Klammern stellen hierbei erste Defaultwerte dar und können über die zeit variabel.

Die Erdgaskosten für die Kraftwärmekopplungseinrichtung ergeben sich vorliegend als Funktion des gültigen Arbeitspunktes der Kraftwärmekopplungseinrichtung.

Weiterhin kann der Kraftwärmekopplungs-Bonus für jede in der Kraftwärmekopplungseinrichtung generierte elektrische Kilowattstunde mit 5,41 ct angesetzt werden. Für die Stromvergütung können 22 ct/ kWh, für die Wärmegutschrift 6 ct/ kWh angesetzt werden.

Um einen ökonomischen Betrieb des Kraftwärmekopplungssystems zu erreichen, werden im Folgenden die in Formel (e) beschriebenen Betriebskosten in Schritten von 15 Minuten (96 Werte für einen Tag (erste Zeitraum)) als Funktion der Tageszeit berechnet.

Die Berechnung geschieht vorzugsweise für den Folgetag auf Basis der bekannten Tarife sowie den ermittelten Lastprognosen.

Wird die von der Kraftwärmekopplungseinrichtung abgegebene elektrische und thermische Leistung, sowie die aktuelle elektrische Last als bekannt vorausgesetzt, so kann für jeden Zeitpunkt (t)

- die im Gebäude eingengenutzte Kraftwärmekopplungs-Energie,
- die aus dem elektrischen Netz bezogene Energie und
- die in das elektrische Netz eingespeiste Energie

bestimmt werden. Für die weiteren Berechnungen wird die Lastprognose als $P_{Last,el}$ bezeichnet.

Die eigengenutzte Kraftwärmekopplungsleistung $P_{KWK, Eig}$ gibt an, welcher Anteil der in der Kraftwärmekopplungseinrichtung generierten elektrischen Leistung $P_{KWK, el}$ auch im Gebäude selber verbraucht wird. Diese Leistung ersetzt somit einen Leistungsbezug aus dem elektrischen Netz.

$$P_{KWK,Eig}(t) = \min(P_{Last,el}(t), P_{KWK,el}(t)) \qquad (f)$$

Die aktuell aus dem elektrischen Netz bezogene Leistung kann bestimmt werden zu

$$P_{Bez,el}(t) = \max(P_{Last,el}(t) - P_{KWK,el}(t), 0) \qquad (g)$$

Die aktuell in das Netz eingespeiste elektrische Leistung lautet

$$P_{Ein,el}(t) = \min(P_{Last,el}(t) - P_{KWK,el}(t), 0) \cdot (-1)) \qquad (h)$$

Unter Verwendung von Formel (e) kann so für jeden Subzeitraum/Zeitschritt t die Bilanz der Betriebskosten berechnet werden.

Bei Erstellung der Leistungssollwertematrix für den nächsten Tag am vorherigen Tag (z.B.: ca. 23:45 Uhr) stehen die elektrischen und thermischen Lastprognosen, sowie die Tarifprognosen zur Verfügung. Auf Basis der genannten Werte können nun zwei prognostizierte Bilanzkurven der Betriebskosten für den Folgetag auf Basis der vorliegenden elektrischen Lastprognose (96 Stützstellen) gemäß Formel (e) berechnet werden.

Erster Schritt:

Die erste Bilanzkurve basiert auf der Annahme, dass die Kraftwärmekopplungseinrichtung über den gesamten Tag mit Nennleistung betrieben wird. Für jede Viertelstunde eines Tages (96 Stützstellen) wird somit jeweils die Bilanz$_{KWK}$(t) gemäß Formel (e) mit den 96 Stützstellen der elektrischen Lastprognose und einer (ständig) in Nennleistung arbeitenden Kraftwärmekopplungseinrichtung berechnet.

Zweiter Schritt:

Zur Berechnung der zweiten Bilanzkurve wird die thermische Lastprognose, insbesondere der prognostizierte thermische Tagesverbrauch im Gebäude (z.B. $W_{Last, th}$ = 120 kWh) benötigt.

Die minimal notwendige thermische Leistung der Kraftwärmekopplungseinrichtung wird gemäß

$$P_{KWK\_Bilanz\_min} = \frac{W_{Last,th}}{24h} \qquad (i)$$

mit

$$P_{KWK\_th\_min} \le P_{KWK\_Bilanz\_min} \le P_{KWK\_th\_max} \qquad (j)$$

berechnet. Die zugehörige elektrisch abgegebene Leistung sowie die aufgenommene Brennstoffleistung werden gemäß folgender Tabelle, welche eine beispielhafte Kennlinie einer Kraftwärmekopplungseinrichtung zeigt, berechnet:

| | $P_{KWK\_min}$ | $P_{KWK\_max}$ |
|---|---|---|
| $P_{KWK\_th}$ [ kW] | 4,00 | 12,50 |
| $P_{KWK\_el}$ [ kW] | 1,44 | 4,70 |
| $P_{KWK\_BS}$ [ kW] | 5,90 | 18,56 |

Für das oben genannte Beispiel gilt:

$$P_{KWK\_Bilanz\_min} = 120 \text{ kWh}/ 24h = 5,00 \text{ kW}.$$

Analog zum ersten Schritt wird dann vorzugsweise für jede Viertelstunde eines Tages (96 Stützstellen) jeweils die Bilanz$_{KWK}$(t) gemäß Formel (e) mit den 96 Stützstellen der elektrischen Lastprognose und dem ermittelten Leistungswert der Kraftwärmekopplungseinrichtung P$_{KWK\_Bilanz\_min}$ berechnet. Im obigen Beispiel würde die Berechnung im zweiten Schritt also mit 5,00 kW durchgeführt.

Figur 3 zeigt beispielhaft die prognostizierte elektrische Leistung des Folgetages 48, sowie die beiden oben beschriebenen Bilanzkurven für Nennleistung 44 und die untere Leistungsstufe 46 der Kraftwärmekopplungseinrichtung.

Weiterhin am vorherigen Tage werden für den folgenden Tag aus den beiden ermittelten Bilanzkurven zwei geordnete Tagesdauerlinien erstellt (Fig. 4). Die bilanzierten Betriebsergebnisse in [ct/15 Minuten] werden dabei über der Zeit aufgetragen. Der Bereich zwischen dem minimalen und maximalen Wert sollte dabei in 1% Schritten aufgeteilt werden.

Des Weiteren werden die prognostizierten Tageslaufzeiten für den Betrieb der Kraftwärmekopplungseinrichtung in maximaler Leistungsstufe P$_{KWK\_th\_max}$ und mit P$_{KWK\_Bilanz\_min}$ in die beiden Kurven eingetragen. Die beiden Laufzeiten ergeben sich dabei als Quotient aus prognostiziertem Tages-Gesamtwärmebedarf und thermischer KWK-Leistung (P$_{KWK\_th\_max}$ und PK$_{WK\_Bilanz\_min}$) gemäß

$$t_{KWK,LZ} = \frac{W_{Last,th}}{P_{KWK,th}} \qquad (k)$$

Die beiden berechneten Werte für t$_{KWK, LZ, th\_max}$ 56 und f$_{KWK, LZ, Bilanz\_min}$ 54 werden in die Kurven eingetragen. In der Figur 4 sind etwa t$_{KWK, LZ, th\_max}$ = 15 h (Kurve 50) und t$_{KWK, LZ, Bilanz\_min}$ = 24 h (Kurve 52).

Die maximal erzielbaren Tages-Betriebsergebnisse Bilanz$_{KWK, Tag}$ für die beiden betrachteten Fälle (P$_{KWK\_th\_max}$, P$_{KWK\_Bilanz\_min}$) ergeben sich als Flächen unter den beiden Kurven 50, 52. Im Beispiel ist die Fläche zur Kurve 50 von rechts oben nach links unten gestrichelt; die Fläche zur Kurve 52 von links oben nach rechts unten gestrichelt.

Der priorisierte Arbeitspunkt P$_{KWK, prio, th}$ der Kraftwärmekopplungseinrichtung am Folgetag (P$_{KWK\_th\_max}$ oder P$_{KWK\_Bilanz\_min}$) wird dann anhand des potentiell höheren Tages-Betriebsergebnisses ausgewählt.

Ist die Fläche unter der Kurve 50 größer/gleich als die Fläche unter der Kurve 52, so ist der priorisierte Arbeitspunkt des Folgetages

$$P_{KWK,prio,th} = P_{KWK,th,max} \qquad (l)$$

Der Schwellwert Bilanz$_{KWK, S}$ wird in diesem Fall aus dem Schnittpunkt der Kurve 50 mit t$_{KWK, LZ, th\_max}$ bestimmt.

Ist oben genannte Bedingung der Flächen nicht erfüllt, so gilt

$$P_{KWK,prio,th} = P_{KWK,Bilanz,min} \qquad (m)$$

Der Schwellwert Bilanz$_{KWK, S}$ wird in diesem Fall aus dem Schnittpunkt der Kurve 52 mit t$_{KWK, LZ, Bilanz\_min}$ bestimmt.

Im obigen Beispiel wird als priorisierte Arbeitspunkt der Kraftwärmekopplungseinrichtung im ersten Zeitraum, also am Folgetag, die KWK-Nennleistung ausgewählt, der Schwellwert wird gemäß Bilanz_nenn_S zu 4,7 ct/15 Minuten bestimmt.

Wie bereits beschrieben wurde, können während des Betriebs die Vorgaben (nahezu) augenblicklich geändert werden. Um 0:00 Uhr beginnt der Betrieb entsprechend den zuvor bestimmten Vorgaben. Auch hier können zu jedem Zeitpunkt (Schrittweite ist vorzugsweise eine Minute) gemäß Formel (e) das Betriebsergebnis BilanzKWK(t) als Funktion der Zeit ermittelt werden. Bei dieser Ermittlung wird nun der ermittelte priorisierte Arbeitspunkt P$_{KWK, prio, th}$ der Kraftwärmekopplungseinrichtung (im obigen Beispiel Nennleistung) verwendet.

Weiterhin werden nun keine Lastprognosen, sondern die zu diesem Zeitpunkt tatsächlich durch die Erfassungseinrichtungen gemessenen elektrischen und/oder thermischen Verbräuche verwendet. Augenblicklich kann hierdurch auf Änderungen reagiert werden.

**Patentansprüche**

1.  Mikro-Kraftwärmekopplungssystem (2, 2.1) mit einer elektrischen Leistung von unter 20 kW für mindestens ein Gebäude (4), umfassend:

    - mindestens eine Kraftwärmekopplungseinrichtung (6),
    - mindestens eine mit der Kraftwärmekopplungseinrichtung (6) verbundene thermische Speichereinrichtung (14) zum Speichern zumindest der durch die Kraftwärmekopplungseinrichtung (6) erzeugten thermischen Energie,
    - mindestens eine über eine Kommunikationsverbindung mit der Kraftwärmekopplungseinrichtung (6) und der thermischen Speichereinrichtung (14) verbundene Steuereinrichtung (24) zum Steuern des Kraftwärmekopplungssystems (2, 2.1),
    - wobei die Steuereinrichtung (24) eingerichtet ist, mindestens einen Leistungssollwert für einen ersten Zeitraum für die Kraftwärmekopplungseinrichtung (6) zu bestimmen,
    **dadurch gekennzeichnet, dass**
    - die Steuereinrichtung (24) eingerichtet ist, mindestens eine Lastprognose für den ersten Zeitraum für das Gebäude (4) zu erstellen, und
    - die Steuereinrichtung (24) eingerichtet ist, in Abhängigkeit der mindestens einen Lastprognose und mindestens einer bereitgestellten Tarifprognose für den ersten Zeitraum den Leistungssollwert für den ersten Zeitraum zu bestimmen,
    - wobei eine elektrische Lastprognose als gewichtete Linearkombination der in den letzten Tagen gemessenen elektrischen Werte realisiert ist, und
    - wobei eine thermische Lastprognose als gewichtete Linearkombination der in den letzten Tagen gemessenen thermischen Werte realisiert ist.

2.  Kraftwärmekopplungssystem (2, 2.1) nach Anspruch 1, **dadurch gekennzeichnet, dass**

    - mindestens eine Erfassungseinrichtung (32, 34, 36, 42) zum Erfassen von thermischen Energieverbrauchsparametern und/oder elektrischen Energieverbrauchsparametern und/oder Brennstoffverbrauchsparametern vorgesehen ist, und
    - die Steuereinrichtung (24) mindestens eine Speichereinrichtung zum Speichern der erfassten thermischen Energieverbrauchsparametern jeweils zusammen mit einem Zeitstempel und/oder der erfassten elektrischen Energieverbrauchsparametern jeweils zusammen mit einem Zeitstempel und/oder der erfassten Brennstoffverbrauchsparametern jeweils zusammen mit einem Zeitstempel eingerichtet ist.

3.  Kraftwärmekopplungssystem (2, 2.1) nach Anspruch 2, **dadurch gekennzeichnet, dass**

    - die Lastprognose eine elektrische Lastprognose für das Gebäude (4) ist,
    - wobei die Steuereinrichtung (24) eingerichtet ist, die elektrische Lastprognose aus einer Mehrzahl der gespeicherten elektrischen Energieverbrauchsparametern zu erstellen,
    und/oder
    - die Lastprognose eine thermische Lastprognose für das Gebäude (4) ist,
    - wobei die Steuereinrichtung (24) eingerichtet ist, die thermische Lastprognose aus einer Mehrzahl von gespeicherten thermischen Energieverbrauchsparametern zu erstellen.

4.  Kraftwärmekopplungssystem (2, 2.1) nach Anspruch 3, **dadurch gekennzeichnet, dass**

    - die Steuereinrichtung (24) eingerichtet ist, die Mehrzahl von gespeicherten thermischen Energieverbrauchsparametern in Abhängigkeit der zugehörigen Zeitstempel unterschiedlich zu gewichten,
    und/oder
    - die Steuereinrichtung (24) eingerichtet ist, die Mehrzahl von gespeicherten elektrischen Energieverbrauchsparametern in Abhängigkeit der zugehörigen Zeitstempel unterschiedlich zu gewichten.

5.  Kraftwärmekopplungssystem (2, 2.1) nach einem der vorherigen Ansprüche, **dadurch gekennzeichnet, dass** die bereitgestellte Tarifprognose einen Tarif für die bezogene elektrische Energie für den ersten Zeitraum, einen Tarif für die eingespeiste Energie für den ersten Zeitraum und/oder einen Tarif für die bezogene Gasenergie für den ersten Zeitraum umfasst.

**6.** Kraftwärmekopplungssystem (2, 2.1) nach einem der vorherigen Ansprüche, **dadurch gekennzeichnet, dass**

- mindestens eine entfernt angeordnete zentrale Steuervorrichtung (26) vorgesehen ist,
- wobei die zentrale Steuervorrichtung (26) eingerichtet ist, zumindest die Tarifprognose zu erstellen, und
- die Steuereinrichtung (24) mit der zentralen Steuervorrichtung (26) über ein Kommunikationsnetz (28) verbunden ist, derart, dass die Tarifprognose der Steuereinrichtung (24) bereitgestellt wird.

**7.** Kraftwärmekopplungssystem (2, 2.1) nach einem der vorherigen Ansprüche, **dadurch gekennzeichnet, dass**

- die Steuereinrichtung (24) eingerichtet ist, den ersten Zeitraum in eine Mehrzahl von Subzeiträumen zu unterteilen, und
- die Steuereinrichtung (24) eingerichtet ist, einen Leistungssollwert für jeden Subzeitraum des ersten Zeitraums zu bestimmen.

**8.** Kraftwärmekopplungssystem (2, 2.1) nach einem der vorherigen Ansprüche, **dadurch gekennzeichnet, dass**

- die mindestens eine Erfassungseinrichtung (32, 34, 36, 42) eingerichtet ist, die augenblicklichen Energieverbrauchsparameter zu erfassen, und
- die Steuereinrichtung (24) eingerichtet ist, die augenblicklichen Energieverbrauchsparameter auszuwerten, derart, dass bei Detektion einer Abweichung des augenblicklich erfassten Energieverbrauchsparameters von der Lastprognose zumindest der augenblickliche Leistungssollwert an den augenblicklichen Energieverbrauchsparameter angepasst wird.

**9.** Kraftwärmekopplungssystem (2, 2.1) nach einem der vorherigen Ansprüche, **dadurch gekennzeichnet, dass**

- die zentrale Steuervorrichtung (26) eingerichtet ist, eine augenblickliche Tarifänderung unmittelbar an die Steuereinrichtung (24) zu übertragen, und
- die Steuereinrichtung (24) eingerichtet ist, die augenblickliche Tarifänderung auszuwerten, derart, dass zumindest der augenblickliche Leistungssollwert an die augenblickliche Tarifänderung angepasst wird.

**10.** Verfahren zum Betreiben eines Mikro Kraftwärmekopplungssystems (2, 2.1) mit einer elektrischen Leistung von unter 20 kW von mindestens einem Gebäude (4), wobei das Kraftwärmekopplungssystem (2, 2.1) mindestens eine Kraftwärmekopplungseinrichtung (6), mindestens eine mit der Kraftwärmekopplungseinrichtung (6) verbundene thermische Speichereinrichtung (14) zum Speichern zumindest der durch die Kraftwärmekopplungseinrichtung (6) erzeugten thermischen Energie, und mindestens eine über eine Kommunikationsverbindung mit der Kraftwärmekopplungseinrichtung (6) und der thermischen Speichereinrichtung (14) verbundene Steuereinrichtung (24) zum Steuern des Kraftwärmekopplungssystems (6) umfasst, umfassend:

- Erstellen von mindestens einer Lastprognose für den ersten Zeitraum für das Gebäude (4) durch die Steuereinrichtung (24),
- wobei eine elektrische Lastprognose als gewichtete Linearkombination der in den letzten Tagen gemessenen elektrischen Werte realisiert wird, und
- eine thermische Lastprognose als gewichtete Linearkombination der in den letzten Tagen gemessenen thermischen Werte realisiert wird,
- Bereitstellen einer Tarifprognose für den ersten Zeitraum, und
- Bestimmen von mindestens einem Leistungssollwert für die Kraftwärmekopplungseinrichtung (6) für den ersten Zeitraum in Abhängigkeit der Lastprognose und der Tarifprognose für den ersten Zeitraum.

**11.** Computerprogramm mit Instruktionen ausführbar auf einem Prozessor derart, dass ein Kraftwärmekopplungssystem (2, 2.1) gemäß Verfahren nach Anspruch 10 gesteuert wird.

**Claims**

**1.** Micro combined heat and power system (2, 2.1) with an electrical power of less than 20 kW for at least one building (4), comprising:

- at least one combined heat and power device (6),

- at least one thermal storage device (14) connected to the combined heat and power device (6) for storing at least the thermal energy generated by the combined heat and power device (6),
- at least one control device (24) connected via a communication link to the combined heat and power device (6) and the thermal storage device (14) for controlling the combined heat and power system (2, 2.1),
- wherein said control device (24) is set up to determine at least one power set point value for a first period of time for said combined heat and power device (6), **characterized in that**
- the control device (24) is set up to generate at least one load forecast for the first period for the building (4), and
- the control device (24) is set up to determine the power set point value for the first period as a function of the at least one load forecast and at least one tariff forecast provided for the first period,
- wherein an electrical load forecast is realised as a weighted linear combination of the electrical values measured in the last few days, and
- wherein a thermal load forecast is realised as a weighted linear combination of the thermal values measured over the last few days.

2. Combined heat and power system (2, 2.1) according to claim 1, **characterised in that**

- at least one detection device (32, 34, 36, 42) is provided for detecting thermal energy consumption parameters and/or electrical energy consumption parameters and/or fuel consumption parameters, and
- the control device (24) comprises at least one storage device for storing the detected thermal energy consumption parameters in each case together with a time stamp and/or the detected electrical energy consumption parameters in each case together with a time stamp and/or the detected fuel consumption parameters in each case together with a time stamp.

3. Combined heat and power system (2, 2.1) according to claim 2, **characterized in that**

- the load forecast is an electrical load forecast for the building (4),
- wherein the control device (24) is set up to generate the electrical load forecast from a plurality of the stored electrical energy consumption parameters, and/or
- the load forecast is a thermal load forecast for the building (4),
- wherein the control device (24) is set up to generate the thermal load forecast from a plurality of stored thermal energy consumption parameters.

4. Combined heat and power system (2, 2.1) according to claim 3, **characterized in that**

- the control device (24) is set up to weight the plurality of stored thermal energy consumption parameters differently in dependence on the associated time stamps,
and/or
- the control device (24) is set up to weight the plurality of stored electrical energy consumption parameters differently in dependence on the associated time stamps.

5. Combined heat and power system (2, 2.1) according to one of the previous claims, **characterized in that** the provided tariff forecast comprises a tariff for the received electrical energy for the first period, a tariff for the supplied energy for the first period and/or a tariff for the received gas energy for the first period.

6. Combined heat and power system (2, 2.1) according to one of the previous claims, **characterized in that**

- at least one remotely arranged central control device (26) is provided,
- wherein the central control device (26) is set up to generate at least the tariff forecast, and
- the control device (24) is connected to the central control device (26) via a communication network (28) such that the tariff forecast is provided to the control device (24).

7. Combined heat and power system (2, 2.1) according to one of the previous claims, **characterized in that**

- the control device (24) is set up to divide the first time period into a plurality of sub periods, and
- the control device (24) is set up to determine a power set point for each sub period of the first period.

8. Combined heat and power system (2, 2.1) according to one of the previous claims, **characterized in that**

- the at least one detection device (32, 34, 36, 42) is set up to detect the current energy consumption parameters, and

- the control device (24) is set up to evaluate the current energy consumption parameters such that, upon detection of a deviation of the currently detected energy consumption parameter from the load forecast at least the current power set point is adapted to the current energy consumption parameters.

**9.** Combined heat and power system (2, 2.1) according to one of the previous claims, **characterized in that**

- the central control device (26) is set up to transmit a current tariff change directly to the control device (24), and
- the control device (24) is set up to evaluate the current tariff change in such a way that at least the current power set point is adapted to the current tariff change.

**10.** Method for operating a micro combined heat and power system (2, 2.1) with an electrical power of less than 20 kW of at least one building (4), comprising at least one combined heat and power device (6), at least one thermal storage device (14) connected to the combined heat and power device (6) for storing at least the thermal energy generated by the combined heat and power device (6), and at least one control device (24) connected via a communication link to the combined heat and power device (6) and the thermal storage device (14) for controlling the combined heat and power system (6):

- generating at least one load forecast for the first period for the building (4) by the control device (24),
- wherein an electrical load forecast is realised as a weighted linear combination of the electrical values measured in the last few days, and
- a thermal load forecast is realised as a weighted linear combination of the thermal values measured in the last few days,
- providing a tariff forecast for the first period, and
- determining at least one power set point for the combined heat and power device (6) for the first period in dependency of the load forecast and the tariff forecast for the first period.

**11.** Computer program with instructions executable on a processor such that a combined heat and power system (2, 2.1) is controlled in accordance with the method of claim 10.

**Revendications**

**1.** Microsystème de cogénération (2, 2.1) avec une alimentation électrique de moins de 20 kW pour au moins un bâtiment (4), comprenant :

- au moins un dispositif de cogénération (6),
- au moins un dispositif d'accumulation thermique (14) relié au dispositif de cogénération (6) pour emmagasiner l'énergie thermique produite pat le dispositif de cogénération (6),
- au moins un dispositif de commande (24) relié par une liaison de communication au dispositif de cogénération (6) et au dispositif d'accumulation thermique (14) pour la commande du système de cogénération (2, 2.1),
- où le dispositif de commande (24) est réglé pour déterminer au moins une valeur limite d'alimentation pendant une première période pour le dispositif de cogénération (6),
- **caractérisé en ce que**
- le dispositif de commande (24) est réglé pour établir des prévisions pour la première période pour le bâtiment (4), et
- le dispositif de commande (24) est réglé pour déterminer la valeur limite d'alimentation pendant la première période en fonction de la au moins une prévision et d'au moins une prévision quotidienne établie pour la première période,
- où une prévision électrique est effectuée sous forme d'une combinaison linéaire pondérée des valeurs électriques mesurées au cours de la dernière journée, et
- où un pronostic thermique est effectué sous forme d'une combinaison linéaire pondérée de valeurs thermiques mesurées au cours de la dernière journée.

**2.** Système de cogénération (2, 2.1) selon la revendication 1, **caractérisé en ce que**

- au moins un dispositif de saisie (32, 34, 36, 42) est prévu, pour la saisie des paramètres de consommation de l'énergie thermique et/ou des paramètres de consommation de l'énergie électrique et/ou des paramètres de consommation de combustible, et

- le dispositif de commande (24) comprend au moins un dispositif d'enregistrement pour enregistrer les paramètres de consommation d'énergie thermique saisis en association avec une marque temporelle et/ou les paramètres de consommation d'énergie électrique saisis en association avec une marque temporelle et/ou les paramètres de consommation de combustible saisis en association avec une marque temporelle.

3. Système de cogénération (2, 2.1) selon la revendication 2, **caractérisé en ce que**

- la prévision est une prévision électrique pour le bâtiment (4),
- où le dispositif de commande (24) est réglé pour élaborer la prévision électrique à partir d'une multitude de paramètres de consommation d'énergie électrique saisis,
et/ou
- la prévision est une prévision thermique pour le bâtiment (4),
- où le dispositif de commande (24) est réglé pour élaborer la prévision thermique à partir d'une multitude de paramètres de consommation d'énergie thermique saisis.

4. Système de cogénération (2, 2.1) selon la revendication 3, **caractérisé en ce que**

- le dispositif de commande (24) est réglé pour pondérer différemment la multitude de paramètres de consommation d'énergie thermique saisis en fonction du marquage temporel,
et/ou
- le dispositif de commande (24) est réglé pour pondérer différemment la multitude de paramètres de consommation d'énergie électrique saisis en fonction du marquage temporel.

5. Système de cogénération (2, 2.1) selon l'une quelconque des revendications précédentes, **caractérisé en ce que** la prévision de tarif élaborée comprend un tarif pour l'énergie électrique achetée pendant la première période, un tarif pour l'énergie injectée pendant la première période et/ou un tarif pour l'énergie gazeuse achetée pendant la première période.

6. Système de cogénération (2, 2.1) selon l'une quelconque des revendications précédentes, **caractérisé en ce que**

- au moins un dispositif de commande central (26) distinct est prévu,
- où le dispositif de commande central (26) est réglé pour établir au moins la prévision de tarif, et
- le dispositif de commande (24) est relié au dispositif de commande central (26) par un réseau de communication (28), de sorte que la prévision de tarif du dispositif de commande (24) est préparée.

7. Système de cogénération (2, 2.1) selon l'une quelconque des revendications précédentes, **caractérisé en ce que**

- le dispositif de commande (24) est réglé pour diviser la première période en une multitude de sous-périodes, et
- le dispositif de commande (24) est réglé pour déterminer une valeur limite d'alimentation pour chaque sous-période de la première période.

8. Système de cogénération (2, 2.1) selon l'une quelconque des revendications précédentes, **caractérisé en ce que**

- le au moins un dispositif de saisie (32, 34, 36, 42) est réglé pour saisir les paramètres de consommation d'énergie instantanés, et
- le dispositif de commande (24) est réglé pour évaluer les paramètres de consommation d'énergie instantanés, de sorte que lors de la détection d'une déviation des paramètres de consommation d'énergie saisis instantanés par rapport à la prévision, au moins la valeur limite d'alimentation instantanée est adaptée au paramètre de consommation d'énergie instantané.

9. Système de cogénération (2, 2.1) selon l'une quelconque des revendications précédentes, **caractérisé en ce que**

- le dispositif de commande central (26) est réglé pour transmettre directement une modification de tarif instantanée au dispositif de commande (24), et
- le dispositif de commande (24) est réglé pour évaluer la modification de tarif instantanée, de sorte qu'au moins la valeur limite d'alimentation instantanée est adaptée à la modification de tarif instantanée.

**10.** Procédé de fonctionnement d'un microsystème de cogénération (2, 2.1) avec une alimentation électrique inférieure à 20 kW d'au moins un bâtiment (4), où le système de cogénération (2, 2.1) comprend au moins un dispositif de cogénération (6), au moins un dispositif d'accumulation thermique (14) relié au dispositif de cogénération (6) pour emmagasiner l'énergie thermique produite pat le dispositif de cogénération (6), et au moins un dispositif de commande (24) relié par une liaison de communication au dispositif de cogénération (6) et au dispositif d'accumulation thermique (14) pour la commande du système de cogénération (2, 2.1), comprenant :

- l'établissement par le dispositif de commande (24), d'au moins une prévision pour une première période pour le bâtiment (4),
- où une prévision électrique est réalisée sous forme d'une combinaison linéaire pondérée des valeurs électriques mesurées au cours de la dernière journée, et
- où une prévision thermique est réalisée sous forme d'une combinaison linéaire pondérée des valeurs thermiques mesurées au cours de la dernière journée,
- l'établissement d'une prévision de tarif pour la première période, et
- la détermination d'au moins une valeur limite d'alimentation pour le dispositif de cogénération (6) pour la première période en fonction de la prévision et de la prévision de tarif pour la première période.

**11.** Programme d'ordinateur avec des instructions lisible sur un processeur, de sorte qu'un système de cogénération (2, 2.1) est commandé selon le procédé de la revendication 10.

Fig.1

Fig.2

Fig.3

Dauer [h]

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010126741 A2